(19) Europäisches Patentamt / European Patent Office / Office européen des brevets

(11) **EP 3 687 780 B1**

(12) **EUROPÄISCHE PATENTSCHRIFT**

(45) Veröffentlichungstag und Bekanntmachung des Hinweises auf die Patenterteilung:
**30.11.2022   Patentblatt 2022/48**

(21) Anmeldenummer: **18732282.1**

(22) Anmeldetag: **11.06.2018**

(51) Internationale Patentklassifikation (IPC):
***B29C 73/16*** *(2006.01)*

(52) Gemeinsame Patentklassifikation (CPC):
**B29C 73/166;** B29L 2030/00

(86) Internationale Anmeldenummer:
**PCT/EP2018/065255**

(87) Internationale Veröffentlichungsnummer:
**WO 2019/063144 (04.04.2019 Gazette 2019/14)**

(54) **VERFAHREN ZUM ABDICHTEN UND AUFPUMPEN AUFBLASBARER GEGENSTÄNDE**

METHOD FOR SEALING AND INFLATING INFLATABLE OBJECTS

PROCÉDÉ PERMETTANT D'ÉTANCHÉIFIER ET DE GONFLER DES OBJETS GONFLABLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.09.2017   DE 102017217259**

(43) Veröffentlichungstag der Anmeldung:
**05.08.2020   Patentblatt 2020/32**

(73) Patentinhaber: **Continental Reifen Deutschland GmbH**
**30165 Hannover (DE)**

(72) Erfinder:
• **ZAUM, Christopher**
**301419 Hannover (DE)**
• **BIALACH, Philip Mathias**
**301419 Hannover (DE)**

(74) Vertreter: **Continental Corporation**
**c/o Continental AG**
**Intellectual Property**
**Postfach 169**
**30001 Hannover (DE)**

(56) Entgegenhaltungen:
**EP-A1- 2 305 570          EP-A2- 1 642 704**
**DE-A1-102007 015 833    DE-T5-112013 004 233**
**US-A- 4 765 367          US-A- 5 070 917**

**Beschreibung**

Die Erfindung betrifft ein Verfahren zum Abdichten und Aufpumpen aufblasbarer Gegenstände, insbesondere zum Abdichten und Aufpumpen von Kraftfahrzeugreifen, wobei ein in einem Dichtmittelbehälter befindliches Dichtmittel in den aufblasbaren Gegenstand gefördert wird und danach mit Hilfe eines durch vorzugsweise einen Elektromotor angetriebenen Kompressors ein Abdicht- bzw. Pumpdruck erzeugt wird, wodurch der aufblasbare Gegenstand abgedichtet und auf einen vorgegebenen Betriebsdruck aufgepumpt wird.

Weiterhin betrifft die Erfindung eine zur Durchführung des Verfahrens besonders geeignete Vorrichtung.

Bei Reifenpannen besteht in aller Regel das Problem, dass - wie beispielsweise bei einem PKW bisher üblich - ein gefüllter und auf einer Felge montierter Reservereifen mitgeführt werden muss, der dann anstelle des Rades mit dem defekten Reifen montiert wird, wonach der defekte Reifen in dem für den Reservereifen vorgesehenen Stauraum im Fahrzeug befestigt werden und später einer Reparatur zugeführt werden muss. Hierzu ist es nicht nur oft notwendig, ein beladenes Fahrzeug auszuräumen, um an den entsprechenden Stauraum zu gelangen, sondern es muss auch das Fahrzeug selbst mit Wagenhebern aufgebockt und eine umständliche Reparaturarbeit durchgeführt werden.

Um diese Nachteile zu vermeiden, sind bereits seit längerer Zeit Reparatursätze oder Pannensets zur temporären Reparatur des Reifens bekannt, die einen Kompressor, ein im Reifen koagulierendes Dichtmittel, meistens ein Latexmilch-Gemisch, die entsprechenden Verbindungsschläuche und die notwendigen Kabelanschlüsse zur Energiezufuhr sowie Schalter, Manometer und Bedienelement beinhalten und somit einen ständig einsetzbaren und vollständigen Reparatursatz bereitstellen, mit dem auf das Mitführen eines auf eine Felge aufgezogenen Reserverades oder auf die ständige Kontrolle anderer Reparaturmaterialien wie Schläuche, verschiedene Werkzeugschlüssel, Wagenheber etc. verzichtet werden kann.

Das für solche Pannensets erforderliche Dichtmittel kann entweder vom Benutzer manuell (Squeeze-System) oder mithilfe des Luftkompressors (Pumpsystem) appliziert werden. Bei einem Pumpsystem wird nach erstmaligem Start des Luftkompressors das Dichtmittel über ein Verteilerventil durch einen Überdruck aus dem entsprechenden Dichtmittelbehälter in den beschädigten Reifen gefördert. Im Falle des Squeeze-Systems wird vor erstmaligem Start des Luftkompressors das Dichtmittel mithilfe einer Quetschflasche durch den Benutzer manuell in den beschädigten Reifen gepresst.

In einem zweiten Prozessschritt wird nun der beschädigte Reifen bis zu einem bestimmten Mindestdruck mit Luft befüllt. In herkömmlichen Systemen erfolgt dieses Wiederbefüllen des Reifens gegen das Ausströmen der Luft durch die durch die Reifenbeschädigung verursachte Leckage. Ein Abdichten der Leckage erfolgt erst nach Erreichen des Mindestdrucks durch Verteilung des Dichtmittels bei der Weiterfahrt. Ohne eine Reifenbewegung zur Verteilung des Dichtmittels im Reifen ist eine Abdichtung der Reifenleckage daher schwierig. Insbesondere beim oben genannten "Squeeze-System", d.h. beim manuellen Einfüllen von Dichtmittel aus einer Quetschflasche, ist eine von vornherein gleichmäßige Verteilung des Dichtmittels im Reifen eher unwahrscheinlich und hängt von der Kraft des Anwenders ab.

Da vor dem Abdichten der vorhandenen Beschädigung der entsprechende Reifen bis zu einem bestimmten Mindestdruck aufgefüllt werden muss, sind für einen erfolgreichen Betrieb ausgesprochen leistungsfähige Luftkompressoren erforderlich. Dieser Sachverhalt trägt signifikant zu den Fertigungskosten des Gesamtsystems bei und setzt eine untere Grenze für die Baugröße sowie das Gewicht von Reifenpannensets.

Die Druckschrift EP 2 305 570 A1 offenbart ein Verfahren nach dem Oberbegriff des Anspruchs 1 und eine Vorrichtung nach dem Oberbegriff des Anspruchs 11.

Für die Erfindung bestand also die Aufgabe, die Arbeitsschritte bei Durchführung einer Reparatur mit einem Pannenset zu erleichtern und so zu verändern, dass ein Verteilen des Dichtmittels durch Reifenbewegung möglichst nicht mehr in dem bekannten Ausmaß nötig wird, wobei weiterhin ein Verfahren und eine Vorrichtung bereitzustellen war, die durch eine Verkleinerung der Baugröße bzw. des Gewichts die Fertigungskosten von Reifenpannensets reduzieren kann.

Gelöst wird diese Aufgabe durch die Merkmale des Hauptanspruchs. Weitere vorteilhafte Ausbildungen sind in den Unteransprüchen offenbart. Ebenfalls ist eine Vorrichtung offenbart, mit deren Hilfe in Verwirklichung einer einzigen allgemeinen erfinderischen Idee es ermöglicht wird, eine sichere und ausreichende Verteilung des Dichtmittels innerhalb eines aufblasbaren Gegenstandes bzw. Reifens und damit die Einleitung der erforderlichen schnellen Dichtung bzw, Koagulation des Dichtmittels in der Leckage zu erreichen.

Dabei wird dem Dichtmittel während des Einfüllens oder nach dem Eintritt in den aufblasbaren Gegenstand ein Treibmittel beigesetzt, welches mit mindestens einer der chemischen Komponenten des Dichtmittels ein Treibgas bildet, das mit mindestens einer Teilmenge des Dichtmittels ein Aerosol bildet.

Als Aerosol wird üblicherweise ein heterogenes Gemisch aus festen oder flüssigen Schwebeteilchen in einem Gas bezeichnet. Bei dem erfindungsgemäßen Verfahren wird dem Dichtmittel während des Beförderns in den Reifen ein Treibmittel beigemischt, so dass bereits im bzw. hinter dem Eingangsventil / der Einlassdüse zum aufblasbaren Gegenstände, spätestens aber in dem Gegenstand bzw. Reifen in einer chemischen Reaktion mit einer der Dichtmittelkomponenten ein Treibgas erzeugt wird, das einen Teil des Dichtmittels in ein Aerosol überführt.

Das Aerosol verteilt sich dann bereits während der Reifenbefüllung mit dem Luftkompressor im beschädigten Reifen und wird auch von dem Luftstrom mitgerissen, der noch durch eine evtl. vorhandene Leckage ausströmt. Die Leckage besteht üblicherweise aus einem mehr oder minder großen Loch oder einer Beschädigung im aufblasbaren Gegenstand bzw. im Reifen. In der Beschädigung selbst bewirkt das Dichtmittelaerosol nun eine Verkleinerung durch Koagulation im Sinne einer beginnenden Vorabdichtung der vorhandenen Leckage. Mit dem Begriff "Vorabdichtung" ist hier eine Verkleinerung der Reifenleckage um mindestens 20% bezeichnet. Somit wird die Füllzeit des Reifens gegenüber dem Fall ohne Vorabdichtung signifikant verkürzt und es kann ein kostengünstiger Kompressor mit einer verringerten Leistung eingesetzt werden, jedenfalls verglichen mit den üblichen Systemerfordernissen ohne die Anwendung des erfindungsgemäßen Verfahrens, das heißt ohne Bildung eines Aerosols.

Eine vorteilhafte Weiterbildung besteht darin, dass das Treibmittel durch Strömungskräfte oder Druckkräfte, die während der Förderung des Dichtmittels in letzterem entstehen, freigesetzt und /oder mit dem Dichtmittel vermischt wird. Damit vermeidet man ein vor der Applikation sonst nötiges aufwändiges Mischen der beiden Bestandteile Dichtmittel und Treibmittel.

Eine weitere vorteilhafte Ausbildung besteht darin, dass ein in einem verformbaren Dichtmittelbehälter, vorzugsweise ein in einer Quetschflasche befindliches Dichtmittel durch manuelle Verformung in den aufblasbaren Gegenstand gefördert wird. Eine solche Ausbildung des Verfahrens erfordert keine aufwändige Steuerung der einzelnen Verfahrensschritte und erlaubt die Verwendung sehr kostengünstiger Bauteile. Quetschflaschen sind sehr einfach herzustellen und auch leicht auszutauschen, etwa dann, wenn nach einem Einsatz bei einer Reifenpanne zur Durchführung des Verfahrens notwendige Teile ersetzt werden müssen.

Eine weitere vorteilhafte Ausbildung besteht darin, dass das Treibmittel aus einem separaten Behältnis dem Dichtmittel beigesetzt wird. Damit wird die Haltbarkeit des Treibmittels gesichert und es wird ein vorzeitiges Vermischen mit Dichtmittel verhindert.

Eine weitere vorteilhafte, weil besonders einfache Ausbildung besteht darin, dass das Treibmittel durch die manuelle Verformung freigesetzt und mit dem Dichtmittel vermischt wird. So kann beispielsweise durch einen kräftigen Druck auf eine Quetschflasche nicht nur das Dichtmittel ausgetrieben, sondern etwa auch ein Folienbeutel gesprengt werden, der ein Treibmittel enthält.

Eine weitere vorteilhafte Ausbildung besteht darin, dass das Treibmittel durch den Pumpdruck des Kompressors dem Dichtmittel beigesetzt wird, vorzugsweise beim Eintritt in den aufblasbaren Gegenstand. Eine solche Verfahrensausbildung kann die Handhabung dadurch vereinfachen, dass die zur Vermischung nötigen Strömungskräfte oder der erforderliche Druck nicht manuell, sondern durch einen "sowieso" beiliegenden Kompressor bereitgestellt wird.

Eine weitere vorteilhafte Ausbildung besteht darin, dass das Treibmittel im Wesentlichen eine Mischung aus einem Hydrogencarbonat, bevorzugt Natriumhydrogencarbonat und/oder Kaliumhydrogencarbonat, einem Säurungsmittel und einem Trennmittel enthält, wobei das Säurungsmittel vorzugsweise aus einer oder mehreren der Säuren Weinsäure, Zitronensäure, Dinatriumdihydrogendiphosphat oder Monocalciumorthophosphat gebildet ist.

Das Treibmittel besteht damit aus sehr einfach erhältlichen und preiswerten Komponenten, die sich analog auch für den Einsatz als Brausepulver oder Backpulver eignen. Die Mischung aus einem Hydrogencarbonat und beispielsweise einem Säurungsmittel aus einer oder mehrerer Säuren aus der Lebensmittelindustrie ist einfach und ohne Schwierigkeiten herzustellen. Zur besseren Lagerbeständigkeit und zum Schutz vor Feuchtigkeit kann ein für solche Anwendungen übliches Trennmittel verwendet werden, wie z.B. Getreidestärke.

Eine weitere vorteilhafte Ausbildung besteht darin, dass das Treibmittel eine Körnung mit einem Äquivalentdurchmesser von 0,2 mm bis 1,0 mm aufweist. Das wirkt sich günstig auf die Mischungsfähigkeit von Dichtmittel und Treibmittel aus. Die Dichtmittelflüssigkeit kann so durch das Treibmittel hindurch fließen, es dabei vollständig aufnehmen und in einer hinreichenden Zeitspanne auflösen.

Durch das Auflösen des Triebmittels im wässrigen Anteil des Reifendichtmittels kommt es dabei, je nach gewählter Zusammensetzung, zu folgender Reaktion:

$$3NaHCO_3(aq) + C_6H_8O_7(aq) -> Na_3C_6H_5O_7(aq) + 3H_2O(1) + 3\ CO_2(g)$$

Aufgrund von meist basischen pH Werten bei Latexbasierten Dichtmitteln, ist es von Vorteil eine um 10-30% erhöhte Menge an Säurungsmittel hinzuzufügen, um einen möglichst vollständigen Reaktionsablauf zu erhalten.

Ein Ausführungsbeispiel mit einem Treibmittel einer Zusammensetzung von 2,2 g Natriumhydrogencarbonat, 2 g Zitronensäure und 0,4 g Maisstärke führt zur Bildung von bis zu 0,6 Liter $CO_2$ Gas bei 20°C.

Um eine optimale Aerosolbildung zu erhalten, besteht eine weitere vorteilhafte Ausbildung des Verfahrens darin, die Dichtmittel-Mischung so anzupassen, dass das Aerosol in kondensierter Form folgende Zusammensetzung enthält

- 3-20% Latex, bezogen auf den Feststoffgehalt, vorzugsweise Naturlatex,
- 3-20 % eines Klebrigmachers, bezogen auf den Feststoffgehalt, vorzugsweise eines Klebeharzes, insbesondere einer Kolophoniumharzdispersion, wobei die mittlere Partikelgröße des Klebrigmachers vorzugsweise <1μm, insbesondere <0,5 μm ist,

- 5-30 % eines oder mehrerer Glykole mit einem Dampfdruck von 5-15 Pa bei 20°C und einem Siedepunkt von 180°C bis 220°C, und
- 30-80% Wasser.

Eine weitere vorteilhafte Ausbildung besteht darin, dass das Dichtmittel 0,5 % - 5 % eines oder mehrerer starker Tenside enthält, vorzugsweise tensidische Sulfonate, insbesondere anionische Mono- oder Di-Sulfonate und/oder eines oder mehrere Alkylarylethersulfate. Damit gelingt es, den Faktor bzw. Parameter $\frac{\rho}{\eta_0^2}$ zu maximieren. Der Zusatz von Tensiden bewirkt hierbei eine Verringerung der Dichte $\rho$ und der dynamischen Viskosität $\eta$. Da jedoch die dynamische Viskosität quadratisch in den beschriebenen Faktor eingeht, wird ab einer bestimmten Konzentration typischerweise die gewünschte Maximierung erzielt. Eine aufgrund ihrer einfachen Ausbildung vorteilhafte und zur Durchführung des erfindungsgemäßen Verfahrens besonders geeignete Vorrichtung weist einen als verformbare Quetschflasche ausgebildeten Dichtmittelbehälter auf und ist mit einem zur Befüllung und zur Durchleitung von Dichtmittel in den aufblasbaren Gegenstand ausgebildeten Verbindungselement oder Adapter versehen, insbesondere und bei Abdichtung von Reifen mit einem zum Anschluss an ein Ventil eines Kraftfahrzeugreifen ausgebildeten im Wesentlichen schlauchförmigen Verbindungselement mit Endstücken zur jeweiligen Verbindung mit Dichtmittelbehälter und Ventil. Der Dichtmittelbehälter weist dabei eine mindestens durch eine Versiegelung, insbesondere eine Siegelfolie verschlossene Öffnung auf, an die das Verbindungselement so anschließbar ist, das bei Herstellung einer Verbindung zwischen Dichtmittelbehälter und Verbindungselement die Versiegelung zur Herstellung des Betriebszustands durchbrochen wird.

Dabei ist das Treibmittel dem Verbindungselement oder dem Dichtmittelbehälter so zugeordnet ist, dass beim Befüllen des aufblasbaren Gegenstands, d.h. beim Fördern des Dichtmittels vom Behälter über das Verbindungselement in den aufblasbaren Gegenstand/Reifen, ein Vermischen von Dichtmittel und Treibmittel erfolgt. Durch eine solche Konstellation wird erst dann das Zusammenfügen von Dichtmittel und Treibmittel ermöglicht, wenn es zur Abdichtung erforderlich ist und in Mischung gebraucht wird. Es entfällt also eine zusätzliche Vorbereitung oder separate Mischungszubereitung.

Erfindungsgemäß weist das Verbindungselement beidseitig je einen zur Herstellung des Betriebszustandes zu öffnenden Verschluss auf und das Treibmittel ist innerhalb des Verbindungselements im Leitungsweg des Dichtmittels angeordnet, vorzugsweise als pulverförmige Füllung mindestens eines Teils des Verbindungselements. Das ist eine besonders einfach herzustellende Ausbildung der Vorrichtung und stellt sicher, dass das Treibmittel "automatisch" im dann am richtige Ort ist, wenn es benötigt wird. Das Verbindungselement wird allemal für den Prozess der Abdichtung gebraucht, so dass durch eine Anordnung des Treibmittels im Verbindungselement sichergestellt ist, dass Treibmittel vorhanden ist.

Eine weitere und in ähnlicher Weise vorteilhafte Ausbildung besteht darin, dass die Versiegelung als doppelwandige Siegelfolie ausgebildet ist und das Treibmittel zwischen den beiden Wänden der Siegelfolie so angeordnet ist, dass bei Durchbrechen der Versiegelung ein Vermischen von Dichtmittel und Treibmittel erfolgt. Mit einer solchen Ausbildung wäre es beispielsweise möglich, unabhängig von der Ausbildung des Verbindungselements das Treibmittel immer für den Gebrauch zur Verfügung zu haben. Es könnten beispielsweise Verbindungselemente einfacher Art, wie oben beschrieben, nur dann ohne Treibmittelzusatz, oder auch Verbindungselemente in Form von Verteilereinrichtungen an einen so ausgebildet Dichtmittelbehälter angeschlossen werden, die ein Einfüllen von Dichtmittel und Treibmittel mithilfe des Kompressordrucks ermöglichen.

Eine weitere vorteilhafte Ausbildung besteht darin, dass das Verbindungselement durch eine Schraubverbindung mit dem Dichtmittelbehälter verbindbar ist und die Schraubverbindung eine Einrichtung zum Durchbrechen der Versiegelung aufweist. Auch eine solche Ausbildung vereinfacht die Anwendung der Vorrichtung und vermeidet, dass zusätzliche Öffnungsvorgänge einem ungeübten Nutzer zugemutet werden.

Anhand eines Ausführungsbeispiels einer Vorrichtung sollen letztere und auch das erfindungsgemäße Verfahren näher erläutert werden. Es zeigen

Fig. 1    Prinzipiell eine Vorrichtung zur Durchführung des erfindungsgemäßen Verfahrens in Form einer manuell zu betätigenden Quetschflasche mit Verbindungselement,

Fig. 2    das Verbindungselement für die Vorrichtung nach Figur 1 mit Treibmittel-Befüllung im Schnitt.

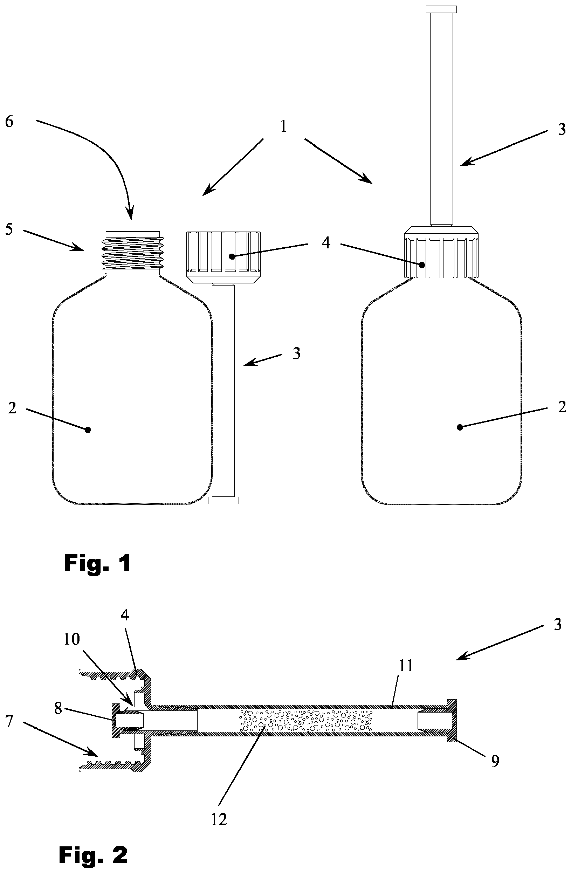

Die Fig. 1 zeigt prinzipiell eine Vorrichtung zur Durchführung des Verfahrens, nämlich eine als "Squeeze-System" für Kraftfahrzeugreifen gestaltete Vorrichtung 1 mit einer vom Benutzer manuell zu betätigenden Quetschflasche 2 als Dichtmittelbehälter, auf der linken Seite im Lager- oder Transportzustand und auf der rechten Seite im betriebsbereiten Zustand.

Die Vorrichtung weist außerdem ein zur Befüllung und zur Durchleitung von Dichtmittel in den Reifen ausgebildetes schlauchförmiges Verbindungselement 3 auf, welches zum Anschluss an ein hier nicht näher dargestelltes Ventil eines Kraftfahrzeugreifen ausgebildet und mit einem Endstück in Form eine Schraubmuffe 4 zur Verbindung mit dem Gewinde 5 der Quetschflasche 2 versehen ist. Der auf der rechten Seite der Fig. 1 dargestellte betriebsbereite Zustand zeigt die Vorrichtung mit aufgeschraubtem Verbindungselement.

Die Quetschflasche 2 weist eine hier ebenfalls nicht näher dargestellte Versiegelung auf, nämlich eine einfache Siegelfolie, die die Öffnung 6 Quetschflasche 2 im Lager- oder Transportzustand verschließt. Bei Herstellung einer Verbindung zwischen Dichtmittelbehälter und Verbindungselement, also dann, wenn das Verbindungselement, welches in seiner Schraubmuffe 4 ein Innengewinde 7 aufweist, auf die Quetsch-Flasche aufgeschraubt ist, wird zur Herstellung des Betriebszustands die Versiegelung durchbrochen.

Das Verbindungselement 3 weist beidseitig je einen zur Herstellung des Betriebszustandes zu öffnenden Verschluss 8, 9 in Form von Verschlusskappen auf. Der linksseitige Verschluss 8 muss bereits vor dem Aufschrauben auf die Quetschflasche 2 geöffnet werden, der rechtsseitige Verschluss 9 kann nach dem Aufschrauben auf die Quetschflasche geöffnet werden.

Um nach Öffnung der Verschlusskappe 8 die Versiegelung zu durchbrechen, weist das Verbindungselement 3 in der Schraubverbindung bzw. in der Schraubmuffe 4 eine Einrichtung in Form einer Ringspitze bzw. Hohlnadel 10 zum Durchbrechen der Versiegelung auf.

Im Verbindungselement 3, d.h. im für das Dichtmittel vorgesehenen rohr- oder schlauchförmigen Leitungsweg 11 des Verbindungselements, ist das Treibmittel 12 für das Dichtmittels angeordnet, hier ausgebildet als pulverförmige Füllung innerhalb des Leitungselements. Das Treibmittel ist hier dem Verbindungselement also so zugeordnet, dass beim Befüllen, d.h. beim Druck auf die Quetschflasche und beim dadurch bedingten Fördern des Dichtmittels durch den Leitungsweg 11 in den Reifen ein Vermischen von Dichtmittel und Treibmittel erfolgt.

In der vorliegenden Vorrichtung erfüllt das Verbindungselement bzw. Adapterstück neben dem Dichtmitteltransport also noch eine zusätzliche Funktion, nämlich die der Aufbewahrung eines pulverförmiges Substanzgemisch, welches als Treibmittel fungiert. Das Treibmittel wird somit aus einem separaten Behältnis dem Dichtmittel beigesetzt. Bei der Vermischung zwischen Dichtmittel und Treibmittel kommt es zu einer chemischen Reaktion, bei der es zu einer Freisetzung des entstehenden Gases kommt, vergleichbar mit sprudelnder Brause aus dem Lebensmittelbereich.

**Bezugszeichenliste**

(Teil der Beschreibung)

| | |
|---|---|
| 1 | Vorrichtung zur Durchführung des Verfahrens als "Squeeze-System" |
| 2 | Dichtmittelbehälter / Quetschflasche |
| 3 | Verbindungselement |
| 4 | Schraubmuffe |
| 5 | Gewinde |
| 6 | Öffnung der Quetschflasche |
| 7 | Innengewinde in der Schraubmuffe |
| 8 | Verschluss, Verschlusskappe |
| 9 | Verschluss, Verschlusskappe |
| 10 | Ringspitze bzw. Hohlnadel |
| 11 | Leitungsweg |
| 12 | Treibmittel |

**Patentansprüche**

**1.** Verfahren zum Abdichten und Aufpumpen aufblasbarer Gegenstände, insbesondere zum Abdichten und Aufpumpen von Kraftfahrzeugreifen, wobei ein in einem Dichtmittelbehälter (2) befindliches Dichtmittel in den aufblasbaren Gegenstand gefördert wird und danach mit Hilfe eines durch vorzugsweise einen Elektromotor angetriebenen Kompressors ein Abdicht- bzw. Pumpdruck erzeugt wird, wodurch der aufblasbare Gegenstand abgedichtet und auf einen vorgegebenen Betriebsdruck aufgepumpt wird,
**dadurch gekennzeichnet, dass** dem Dichtmittel während des Einfüllens oder nach dem Eintritt in den aufblasbaren Gegenstand ein Treibmittel (12) beigesetzt wird, welches mit mindestens einer der chemischen Komponenten des Dichtmittels ein Treibgas bildet, das mit mindestens einer Teilmenge des Dichtmittels ein Aerosol bildet.

**2.** Verfahren nach Anspruch 1, bei dem das Treibmittel durch Strömungskräfte oder Druckkräfte, die während der Förderung des Dichtmittels in letzterem entstehen, freigesetzt und /oder mit dem Dichtmittel vermischt wird.

**3.** Verfahren nach Anspruch 1 oder 2, bei dem ein in einem verformbaren Dichtmittelbehälter, vorzugsweise ein in einer Quetschflasche befindliches Dichtmittel durch manuelle Verformung in den aufblasbaren Gegenstand gefördert wird.

**4.** Verfahren nach einem der Ansprüche 1 bis 3, bei dem das Treibmittel aus einem separaten Behältnis dem Dichtmittel beigesetzt wird.

**5.** Verfahren nach einem der Ansprüche 1 bis 4, bei dem das Treibmittel durch die manuelle Verformung freigesetzt und mit dem Dichtmittel vermischt wird.

**6.** Verfahren nach einem der Ansprüche 1 bis 4, bei dem das Treibmittel durch den Pumpdruck des Kompressors dem Dichtmittel beigesetzt wird, vorzugsweise beim Eintritt in den aufblasbaren Gegenstand.

**7.** Verfahren nach einem der Ansprüche 1 bis 6, bei dem das Treibmittel im Wesentlichen eine Mischung aus einem Hydrogencarbonat, bevorzugt Natriumhydrogencarbonat und/oder Kaliumhydrogencarbonat, einem Säurungsmittel und einem Trennmittel enthält, wobei das Säurungsmittel vorzugsweise aus einer oder mehreren der Säuren Weinsäure, Zitronensäure, Dinatriumdihydrogendiphosphat oder Monocalciumorthophosphat gebildet ist.

**8.** Verfahren nach Anspruch 7, bei dem das Treibmittel eine Körnung mit einem Äquivalentdurchmesser von 0,2 mm bis 1,0 mm aufweist.

**9.** Verfahren nach einem der Ansprüche 1 bis 8, bei dem das Aerosol in kondensierter Form folgende Zusammensetzung enthält

• 3-20% Latex, bezogen auf den Feststoffgehalt, vorzugsweise Naturlatex,
• 3-20 % eines Klebrigmachers, bezogen auf den Feststoffgehalt, vorzugsweise eines Klebeharzes, insbesondere einer Kolophoniumharzdispersion, wobei die mittlere Partikelgröße des Klebrigmachers vorzugsweise <1 $\mu$m, insbesondere <0,5 $\mu$m ist,
• 5-30 % eines oder mehrerer Glykole mit einem Dampfdruck von 5-15 Pa bei 20°C und einem Siedepunkt von 180°C bis 220°C, und
• 30-80% Wasser.

**10.** Verfahren nach einem der Ansprüche 7 bis 9, bei dem das Dichtmittel 0,5 % - 5 % eines oder mehrerer starker Tenside enthält, vorzugsweise tensidische Sulfonate, insbesondere anionische Mono- oder Di-Sulfonate und/oder eines oder mehrere Alkylarylethersulfate.

**11.** Vorrichtung (1) zur Durchführung des Verfahrens nach Anspruch 1 bis 10, mit einem als verformbare Quetschflasche (2) ausgebildeten Dichtmittelbehälter, sowie mit einem zur Befüllung und zur Durchleitung von Dichtmittel in den aufblasbaren Gegenstand ausgebildeten Verbindungselement oder Adapter (3), insbesondere mit einem zum Anschluss an ein Ventil eines Kraftfahrzeugreifen ausgebildeten im Wesentlichen schlauchförmigen Verbindungselement (3) mit Endstücken (4) zur jeweiligen Verbindung mit Dichtmittelbehälter und Ventil, wobei der Dichtmittelbehälter (2) eine mindestens durch eine Versiegelung, insbesondere eine Siegelfolie verschlossene Öffnung (6) aufweist, an die das Verbindungselement (3, 4) so anschließbar ist, das bei Herstellung einer Verbindung zwischen Dichtmittelbehälter und Verbindungselement die Versiegelung zur Herstellung des Betriebszustands durchbrochen wird, wobei ein Treibmittel (12) dem Verbindungselement oder dem Dichtmittelbehälter so zugeordnet ist, das beim Befüllen des aufblasbaren Gegenstands ein Vermischen von Dichtmittel und Treibmittel erfolgt, **dadurch gekennzeichnet, dass** das Verbindungselement beidseitig je einen zur Herstellung des Betriebszustandes zu öffnenden Verschluss (8, 9) aufweist und das Treibmittel (12) innerhalb des Verbindungselements (3) im Leitungsweg (11) des Dichtmittels angeordnet ist.

**12.** Vorrichtung nach Anspruch 11, bei der das Treibmittel (12) innerhalb des Verbindungselements (3) im Leitungsweg (11) des Dichtmittels als pulverförmige Füllung mindestens eines Teils des Verbindungselements angeordnet ist.

**13.** Vorrichtung nach einem der Ansprüche 11 bis 12, bei der das Verbindungselement durch eine Schraubverbindung (4, 5) mit dem Dichtmittelbehälter (2) verbindbar ist und die Schraubverbindung (4) eine Einrichtung (10) zum Durchbrechen der Versiegelung aufweist.

**Claims**

1. Process for sealing and inflating inflatable articles, in particular for sealing and inflating pneumatic vehicle tires, wherein a sealant present in a sealant container (2) is conveyed into the inflatable article and subsequently, using a compressor preferably driven by an electric motor, a sealing/pumping pressure is generated, as a result of which the inflatable article is sealed and inflated to a predetermined operating pressure,
**characterized in that** during filling or after entry into the inflatable article a blowing agent (12) which forms a blowing gas with at least one of the chemical components of the sealant is added, said blowing gas forming an aerosol with at least a sub-amount of the sealant.

2. Process according to Claim 1, wherein the blowing agent is released and/or mixed with sealant as a result of flow forces or compressive forces formed in sealant during conveying thereof.

3. Process according to Claim 1 or 2, wherein a sealant in a deformable sealant container, preferably a sealant in a squeezable bottle, is conveyed into the inflatable article by manual deformation.

4. Process according to any of Claims 1 to 3, wherein the blowing agent is added to the sealant from a separate receptacle.

5. Process according to any of Claims 1 to 4, wherein the blowing agent is released and mixed with the sealant as a result of the manual deformation.

6. Process according to any of Claims 1 to 4, wherein the blowing agent is added to the sealant as a result of the inflation pressure of the compressor, preferably upon entry into the inflatable article.

7. Process according to any of Claims 1 to 6, wherein the blowing agent is essentially a mixture of a hydrogencarbonate, preferably sodium hydrogencarbonate and/or potassium hydrogencarbonate, an acidulant and a release agent, wherein the acidulant is preferably formed from one or more of the acids tartaric acid, citric acid, disodium dihydrogenphosphate or monocalcium orthophosphate.

8. Process according to Claim 7, wherein the blowing agent has a particle size with an equivalent diameter of 0.2 mm to 1.0 mm.

9. Process according to any of Claims 1 to 8, wherein the aerosol in condensed form contains the following composition

   • 3-20% of latex based on the solids content, preferably natural latex,
   • 3-20% of a tackifier, based on the solids content, preferably of a tackifier resin, in particular a colophony resin dispersion, wherein the average particle size of the tackifier is preferably <1 $\mu$m, in particular <0.5 $\mu$m,
   • 5-30% of one or more glycols having a vapor pressure of 5-15 Pa at 20°C and a boiling point of 180°C to 220°C and
   • 30-80% water.

10. Process according to any of Claims 7 to 9, wherein the sealant contains 0.5%-5% of one or more strong surfactants, preferably surfactant sulfonates, in particular anionic mono- or disulfonates and/or one or more alkyl aryl ether sulfates.

11. Apparatus (1) for performing the process according to Claims 1 to 10, comprising a sealant container in the form of a deformable squeezable bottle (2) and a connecting element or adapter (3) configured for filling and for conducting the sealant into the inflatable article, in particular having an essentially hose-shaped connecting element (3) configured for connection to a valve of a vehicle tire having end pieces (4) for respective connection with the sealant container and the valve, wherein the sealant container (2) has an opening (6) sealed by at least one seal, in particular a sealing film, to which the connecting element (3, 4) is connectable such that upon creating a connection between the sealant container and the connecting element the seal is broken to produce the operating state, wherein a blowing agent (12) is allocated to the connecting element or the sealant container such that upon filling the inflatable article a mixing of sealant and blowing agent occurs, **characterized in that** the connecting element has a respective closure (8, 9) at each end of the connecting element, that is to be opened to produce the operating state, and the blowing agent (12) is arranged inside the connecting element (3) in the flow path (11) of the sealant.

12. Apparatus according to Claim 11, wherein the blowing agent (12) is arranged inside the connecting element (3) in the flow path (11) of the sealant as a pulverulent filling of at least a portion of the connecting element.

13. Apparatus according to either of Claims 11 to 12, wherein the connecting element is connectable by a screw connection (4, 5) with the sealant container (2) and the screw connection (4) comprises a means (10) for breaking the seal.

**Revendications**

1. Procédé pour étanchéifier et gonfler des objets gonflables, en particulier pour étanchéifier et gonfler des pneus de véhicules automobiles, un agent d'étanchéité se trouvant dans un récipient (2) pour agent d'étanchéité étant transporté dans l'objet gonflable et ensuite une pression d'étanchéification, respectivement une pression de pompe étant générée à l'aide d'un compresseur entraîné par de préférence un moteur électrique, par le biais duquel l'objet gonflable est étanchéifié et gonflé à une pression de fonctionnement prédéterminée, **caractérisé en ce qu'**un agent de gonflement (12), qui forme un gaz propulseur avec au moins l'un des composants chimiques de l'agent d'étanchéité, qui forme un aérosol avec au moins une quantité partielle de l'agent d'étanchéité, est ajouté à l'agent d'étanchéité pendant le remplissage ou après l'entrée dans l'objet gonflable.

2. Procédé selon la revendication 1, dans lequel l'agent de gonflement est libéré par des forces d'écoulement ou des forces de pression qui sont générées dans l'agent d'étanchéité pendant le transport de celui-ci et/ou est mélangé avec l'agent d'étanchéité.

3. Procédé selon la revendication 1 ou 2, dans lequel un agent d'étanchéité se trouvant dans un récipient déformable pour agent d'étanchéité, de préférence un agent d'étanchéité se trouvant dans une bouteille à presser, est transporté par déformation manuelle dans l'objet gonflable.

4. Procédé selon l'une quelconque des revendications 1 à 3, dans lequel l'agent de gonflement est ajouté à l'agent d'étanchéité à partir d'un récipient distinct.

5. Procédé selon l'une quelconque des revendications 1 à 4, dans lequel l'agent de gonflement est libéré par la déformation manuelle et est mélangé avec l'agent d'étanchéité.

6. Procédé selon l'une quelconque des revendications 1 à 4, dans lequel l'agent de gonflement est ajouté à l'agent d'étanchéité par la pression de pompe du compresseur, de préférence lors de l'entrée dans l'objet gonflable.

7. Procédé selon l'une quelconque des revendications 1 à 6, dans lequel l'agent de gonflement contient essentiellement un mélange d'un hydrogénocarbonate, préférablement l'hydrogénocarbonate de sodium et/ou l'hydrogénocarbonate de potassium, d'un agent d'acidification et d'un agent de séparation, l'agent d'acidification étant de préférence formé à partir d'un ou plusieurs des acides : acide tartrique, acide citrique dihydrogénodiphosphate disodique ou orthophosphate monocalcique.

8. Procédé selon la revendication 7, dans lequel l'agent de gonflement présente une granulométrie dotée d'un diamètre équivalent de 0,2 mm à 1,0 mm.

9. Procédé selon l'une quelconque des revendications 1 à 8, dans lequel l'aérosol contient en forme condensée la composition suivante

• 3 à 20 % de latex, par rapport à la teneur en solides, de préférence de latex naturel,
• 3 à 20 % d'un agent poisseux, par rapport à la teneur en solides, de préférence d'une résine adhésive, en particulier d'une dispersion de résine de colophane, la taille moyenne de particule de l'agent poisseux étant de préférence < 1 $\mu$m, en particulier < 0,5 $\mu$m,
• 5 à 30 % d'un ou plusieurs glycols dotés d'une pression de vapeur de 5 à 15 Pa à 20 °C et d'un point d'ébullition de 180 °C à 220 °C, et
• 30 à 80 % d'eau.

**10.** Procédé selon l'une quelconque des revendications 7 à 9, dans lequel l'agent d'étanchéité contient 0,5 % à 5 % d'un ou plusieurs tensioactifs forts, de préférence des sulfonates tensioactifs, en particulier des monosulfonates ou disulfonates anioniques, et/ou d'un ou plusieurs alkylaryléthersulfates.

**11.** Dispositif (1) pour la mise en œuvre du procédé selon les revendications 1 à 10, comportant un récipient pour agent d'étanchéité réalisé comme bouteille à presser déformable (2), ainsi qu'un élément de raccordement ou adaptateur (3) conçu pour le remplissage et le passage d'agent d'étanchéité dans l'objet gonflable, en particulier comportant un élément de raccordement (3) essentiellement tubulaire, conçu pour la connexion à une soupape d'un pneu de véhicules automobiles, comportant des embouts (4) pour la liaison respective avec le récipient pour agent d'étanchéité et la soupape, le récipient pour agent d'étanchéité (2) présentant une entrée (6) fermée au moins par un scellement, en particulier une feuille de scellement, à laquelle l'élément de liaison (3, 4) peut être connecté de telle manière que lors de l'établissement d'une liaison entre le récipient pour agent d'étanchéité et l'élément de liaison, le scellement est percé pour générer l'état de fonctionnement, un agent de gonflement (12) étant associé à l'élément de liaison ou au récipient pour agent d'étanchéité de telle manière que, lors du remplissage de l'objet gonflable, un mélange d'agent d'étanchéité et d'agent de gonflement est réalisé, **caractérisé en ce que** l'élément de liaison présente des deux côtés à chaque fois une fermeture à ouvrir (8, 9) pour la génération de l'état de fonctionnement et l'agent de gonflement (12) est disposé à l'intérieur de l'élément de liaison (3) sur le trajet de conduite (11) de l'agent d'étanchéité.

**12.** Dispositif selon la revendication 11, dans lequel l'agent de gonflement (12) est disposé à l'intérieur de l'élément de liaison (3) sur le trajet de conduite (11) de l'agent d'étanchéité en tant que remplissage sous forme de poudre d'au moins une partie de l'élément de liaison.

**13.** Dispositif selon l'une quelconque des revendications 11 et 12, dans lequel l'élément de liaison peut être relié avec le récipient pour agent d'étanchéité (2) par une liaison par vis (4, 5) et la liaison par vis (4) présentant une installation (10) pour percer le scellement.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2305570 A1